# EUROPEAN PATENT APPLICATION

(11) **EP 3 064 451 A1**
(43) Date of publication of application: **07.09.2016**
(21) Application number: 16158427.1
(22) Date of filing: 03.03.2016
(51) Int. Cl.: B65D 90/12

(54) **CRADLE FOR CYLINDRICAL OBJECTS AND SYSTEM THEREWITH**

(30) Priority: 03.03.2015 GB 201503599
(71) Applicant: Urenco Limited, Bells Hill Stoke Poges Buckinghamshire SL2 4JS (GB)
(72) Inventor: Frodsham, David Neil, Nantwich, Cheshire CW5 7PN (GB)
(74) Representative: Chettle, John Edward

(57) **Abstract**

A cradle (1, 27) for supporting a cylindrical storage container, comprising a longitudinal support member (2, 28) having at least one flange (4, 30), first and second angular supports (3, 29) forming a cradle region to support the container in a stable position above the at least one flange (4, 30), at least one first support pad (22, 53) located on a support surface (6, 32) of the first angular support; and at least one second support pad (22, 53) located on a support surface (6, 32) of the second angular support.

## Description

### Field

This specification relates to cradles for supporting cylindrical objects such as cylindrical storage containers.

### Summary

This specification provides a cradle for supporting a cylindrical storage container, comprising a longitudinal support member having at least one flange, first and second angular supports forming a cradle region to support the container in a stable position above the at least one flange, at least one first support pad located on a support surface of the first angular support and at least one second support pad located on a support surface of the second angular support.

The at least one flange may comprise an upper flange and the support member may further comprise a lower flange.

The support member may further comprise a web between the upper and lower flanges.

The upper and lower flanges may be parallel to one another and may be perpendicular to the web.

The support member may further comprise at least one web stiffener connected to the upper and lower flanges and the web.

The at least one web stiffener may be welded to the upper and lower flanges and the web.

The support member may comprise an I-beam.

The support member may have an open section.

The planes of the support surfaces of the first and second angular supports may diverge from one another with increasing perpendicular distance from the at least one flange.

The first and second angular supports may be connected to an upper surface of the at least one flange.

The first and second angular supports may be welded to an upper surface of the at least one flange.

The first and second angular supports may each comprise a planar container support element and a planar bridging element connected between an underside of the container support element and the at least one flange.

The planar bridging element may be welded between the underside of the container support element and the at least one flange.

The support surface of the first angular support may be a surface of the planar support element of the first angular support; and the support surface of the second angular support may be a surface of the planar support element of the second angular support.

The cradle may comprise a linking region for linking the cradle to a corresponding linking region of a neighbouring cradle.

The linking region may comprise a planar linking element having at least one aperture for accommodating a linking pin.

The linking pin may comprise a shear pin.

The plane of the linking element may be perpendicular to the plane of the at least one flange.

The linking region may comprise at least one linking plate for attaching the planar linking element to a planar linking element of a neighbouring cradle.

The at least one linking plate may comprise at least one aperture for accommodating the linking pin so that the linking pin can be inserted through the at least one linking plate and the linking element to attach the at least one linking plate to the linking element.

The cradle may comprise at least two of the at least one linking plates.

A first of the linking plates may be attached to a first face of the linking element and a second of the linking plates may be attached to a second face of the linking element through the apertures in the linking plates and linking element.

The first of the linking plates may be further attached to a first face of a linking element of a neighbouring cradle through a further aperture in the first linking plate and an aperture in the linking element of the neighbouring cradle.

The second of the linking plates may be further attached to a second face of the linking element of the neighbouring cradle through a further aperture in the second linking plate and the aperture in the linking element of the neighbouring cradle.

The linking plates may be attached to the linking element of the neighbouring cradle by inserting a further linking pin through the apertures.

The further linking pin may comprise a shear pin.

The first and second angular supports may be separated by a region of the longitudinal support member.

The support member may be formed from a metallic material.

The angular supports may be formed from a metallic material.

The metallic material may be Standard Steel Grade S₃₅₅.

The at least one first support pad may be separated by a gap from the at least one second support pad.

The at least one first support pad may be separate from the at least one second support pad.

The cradle may further comprise a bridging support located between the at least one first support pad and the at least one second support pad.

The at least one first support pad may be joined to the at least one second support pad by the bridging support.

The bridging support may comprise a concave support surface for supporting a circumferential surface of a cylindrical storage container.

The bridging support may be formed from a resilient and/or compliant plastics material.

The at least one first support pad may comprise a concave support surface for supporting a circumferential surface of a cylindrical storage container.

The at least one second support pad may comprise a concave support surface for supporting a circumferential surface of a cylindrical storage container.

The at least one first and/or the at least one second support pad may comprise a concave support surface for supporting a non-conforming circumferential surface of a cylindrical storage container.

The at least one first and second support pads may be formed from a resilient and/or compliant plastics material.

This specification also provides a system for supporting a plurality of cylindrical storage containers, comprising a plurality of the cradles linked together to form at least two rows of cradling regions to support the forward and aft ends of the plurality of containers.

For the purposes of example only, embodiments are described below with reference to the accompanying figures.

### Brief Description of the Figures

Figure 1 is a perspective view of a cradle for supporting a cylindrical storage container;
figure 1A is a perspective view of a linking plate of a linking region of a cradle for supporting a cylindrical storage container;
figure 2 is a side-on view of a cradle for supporting a cylindrical storage container;
figure 3 is a top-down view of a cradle for supporting a cylindrical storage container;
figure 4 is an end-on view of a cradle for supporting a cylindrical storage container;
figure 5 is a perspective view of a cradle for supporting a cylindrical storage container, including a pair of container support pads;
figure 6 is a side-on view of a cradle for supporting a cylindrical storage container, including a pair of container support pads;
figure 7 is a top-down view of a cradle for supporting a cylindrical storage container, including a pair of container support pads;
figure 8 is an end-on view of a cradle for supporting a cylindrical storage container, including a pair of container support pads;
figure 9 is a perspective view of a container support pad of a cradle for supporting a cylindrical storage container;
figure 10 is a side-on view of a container support pad of a cradle for supporting a cylindrical storage container;
figure 11 is a top-down view of a container support pad of a cradle for supporting a cylindrical storage container;
figure 12 is a front-on view of a container support pad of a cradle for supporting a cylindrical storage container;
figure 13 is an illustration of a pair of rows of linked cradles for supporting a plurality of cylindrical storage containers;
figure 14 illustrates specific example dimensions and geometries for a cradle for supporting a cylindrical storage container; and
figure 15 illustrates specific example dimensions and geometries for an angular support and support pad of a cradle for supporting a cylindrical storage container;
figure 16 is a perspective view of a cradle for supporting a cylindrical storage container;
figure 16A is a perspective view of a linking plate of a linking region of a cradle for supporting a cylindrical storage container;
figure 16B is a perspective view of a pin for securing at least one linking plate to at least one cradle for supporting a cylindrical storage container;
figure 16C is a perspective view of a locking pin for securing a pin such as that shown in

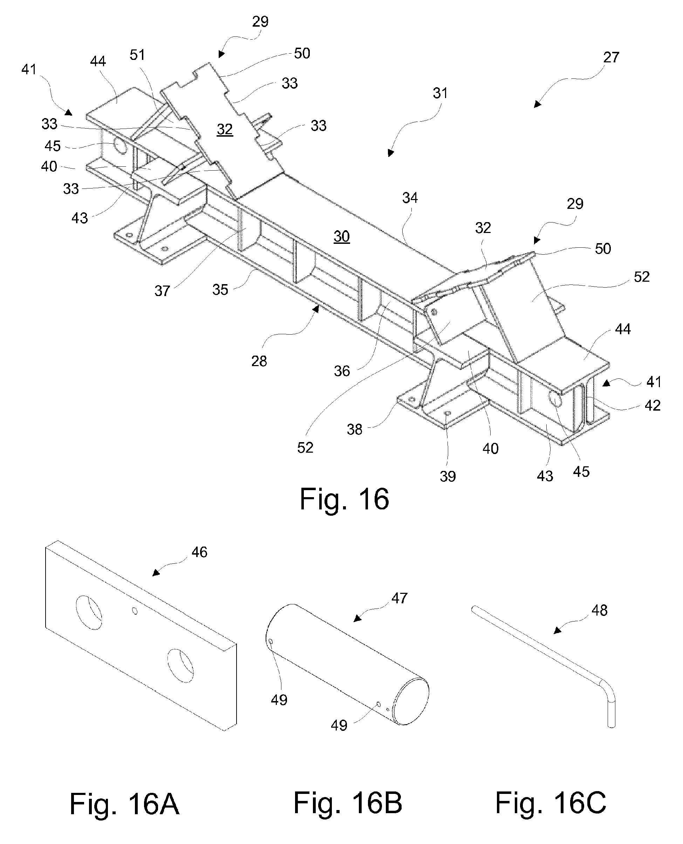

figure 16B in a linking region of at least one cradle for supporting a cylindrical storage container;

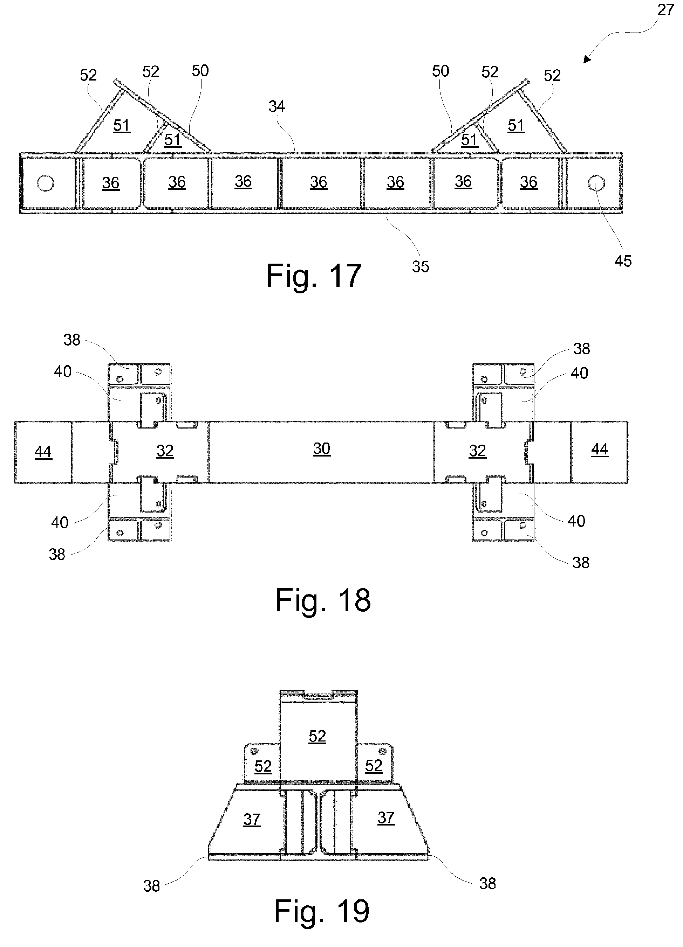

figure 17 is a side-on view of a cradle for supporting a cylindrical storage container;
figure 18 is a top-down view of a cradle for supporting a cylindrical storage container;
figure 19 is an end-on view of a cradle for supporting a cylindrical storage container;

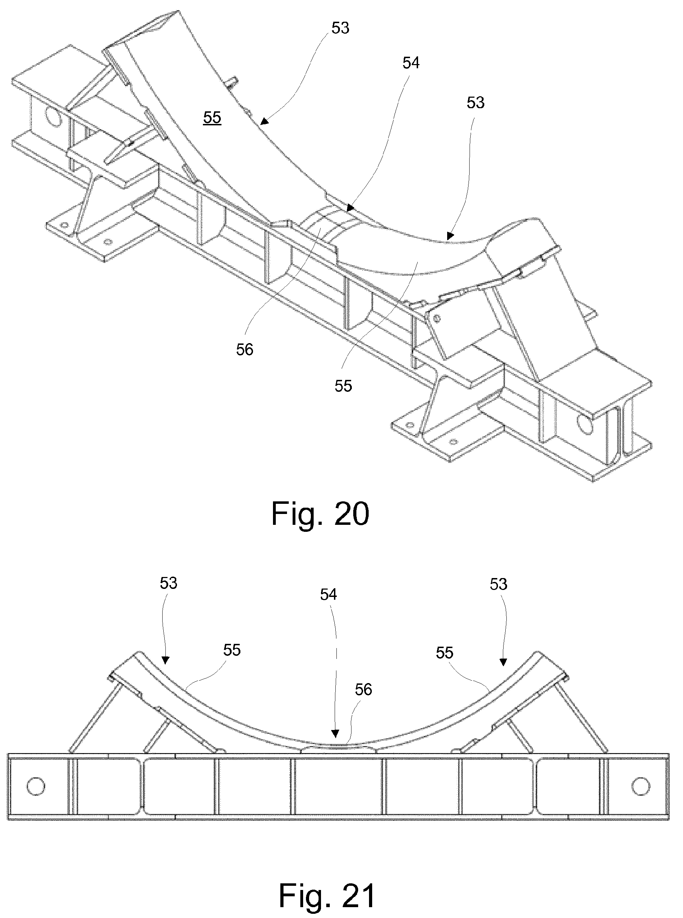

figure 20 is a perspective view of a cradle for supporting a cylindrical storage container, including a container support pad;
figure 21 is a side-on view of a cradle for supporting a cylindrical storage container, including a container support pad;

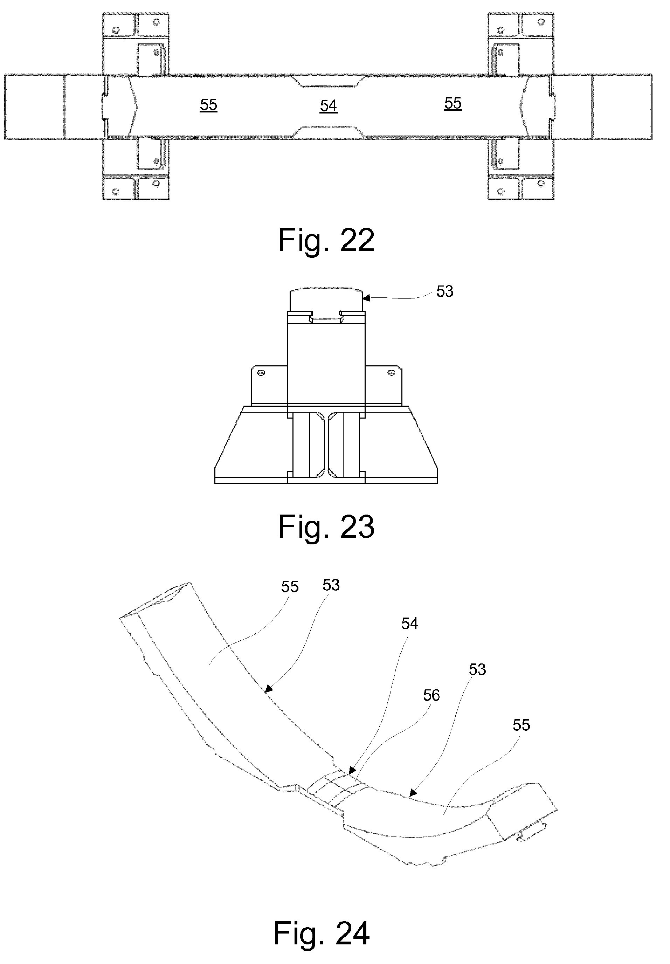

figure 22 is a top-down view of a cradle for supporting a cylindrical storage container, including a container support pad;
figure 23 is an end-on view of a cradle for supporting a cylindrical storage container, including a container support pad;
figure 24 is a perspective view of a container support pad of a cradle for supporting a cylindrical storage container;

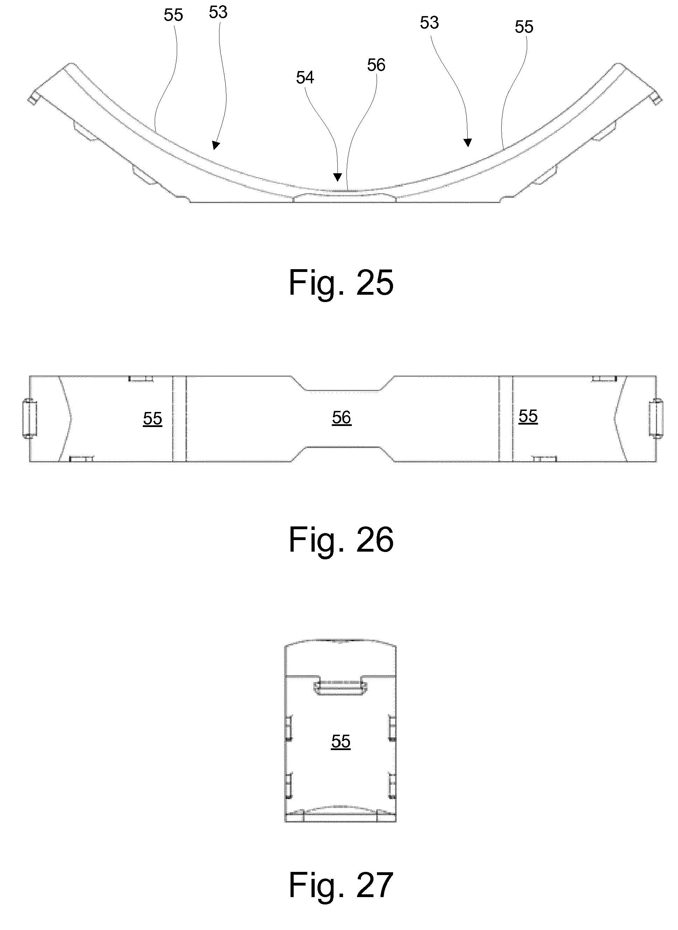

figure 25 is a side-on view of a container support pad of a cradle for supporting a cylindrical storage container;
figure 26 is an underside view of a container support pad of a cradle for supporting a cylindrical storage container;
figure 27 is a rear-on view of a container support pad of a cradle for supporting a cylindrical storage container;

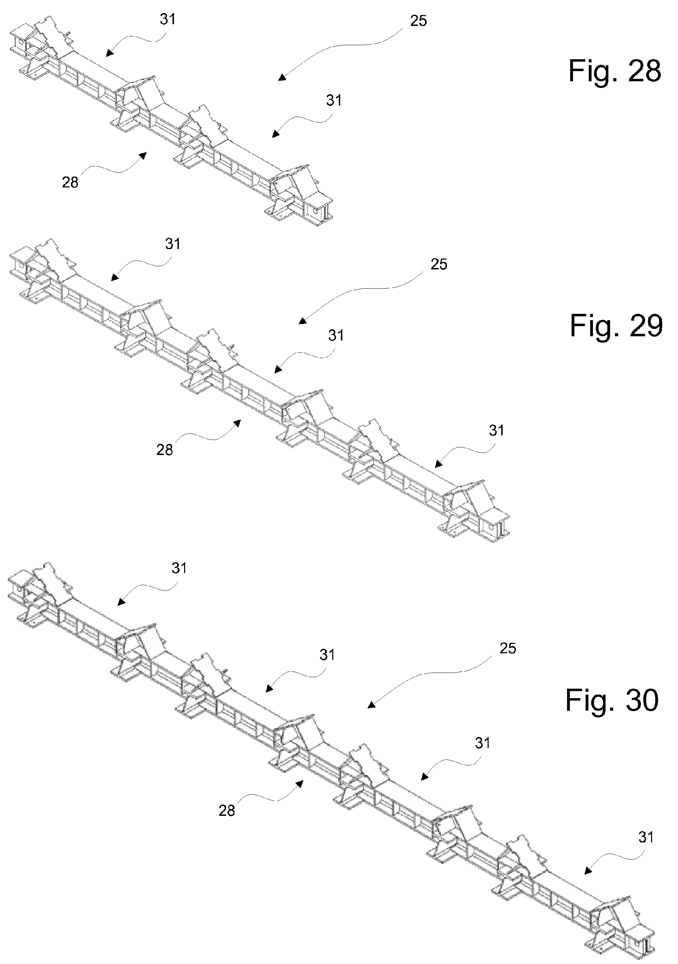

figure 28 is an illustration of two joined cradles for supporting two cylindrical storage containers;
figure 29 is an illustration of three joined cradles for supporting three cylindrical storage containers;
figure 30 is an illustration of four joined cradles for supporting four cylindrical storage containers;

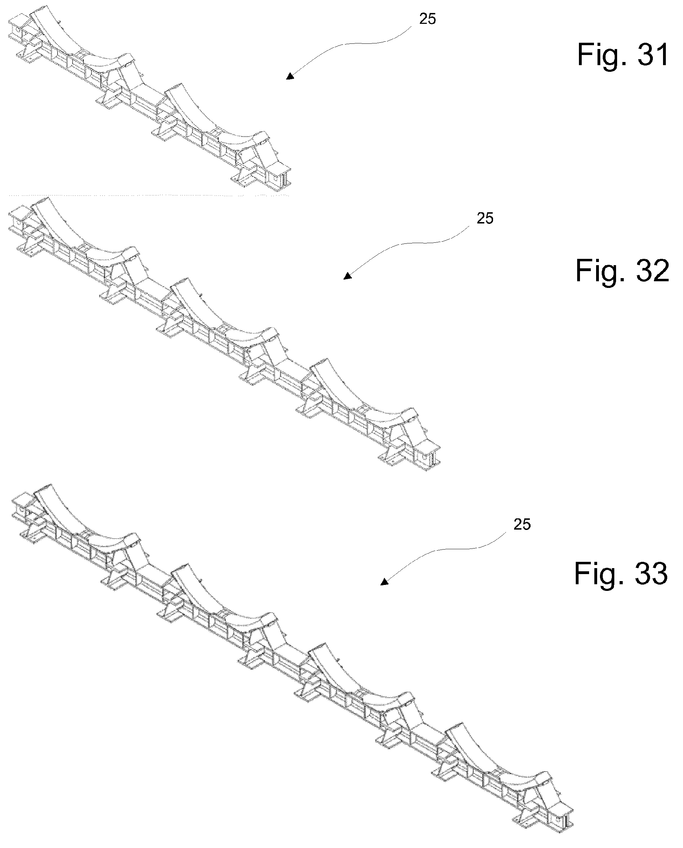

figure 31 is an illustration of two joined cradles for supporting two cylindrical storage containers, each cradle including a container support pad;
figure 32 is an illustration of three joined cradles for supporting three cylindrical storage containers, each cradle including a container support pad; and
figure 33 is an illustration of four joined cradles for supporting four cylindrical storage containers, each cradle including a container support pad

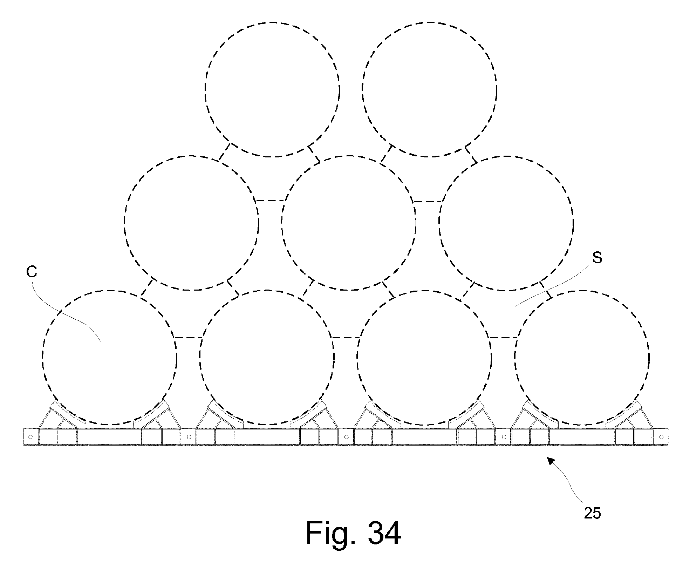

figure 34 illustrates a cradling system supporting cylindrical storage containers in three vertical tiers.

### Detailed Description

A cradle for supporting a generally cylindrical container of material in a stable position is described below. The cradle 1 may be used as part of an array of cradles for supporting a large number of containers in a close packed configuration.

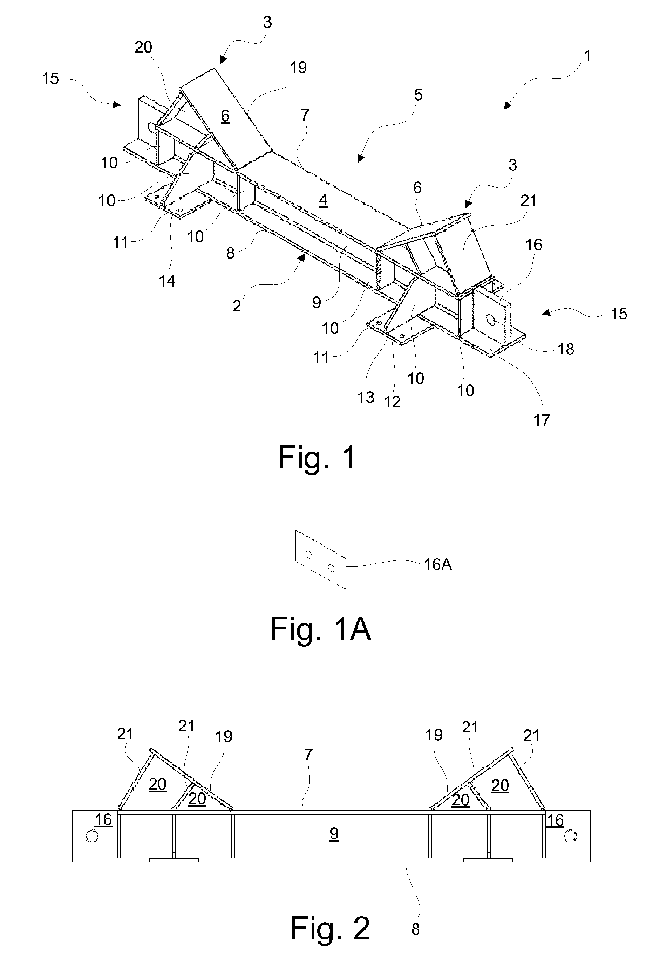

Referring to figure 1, the cradle 1 comprises a support member in the form of a beam 2 and two angular supports 3 for supporting a cylindrical storage container above the beam 2. The angular supports 3 are located in a spaced-apart arrangement on an upper surface 4 of the beam 2. The region between the angular supports 3 is a cradling region 5, in which a container of material can be safely accommodated for short, medium and long term storage.

In use, the direction of the beam 2 is perpendicular to the longitudinal axis of the container so that the beam 2 passes underneath the container in a transverse direction to support the container against gravity. In addition to supporting the container against gravity, the cradling region 5 is arranged to prevent the container from rolling or otherwise moving in a lateral direction relative to the beam 2.

As shown in figure 1, the angular supports 3 of the cradling region 5 each comprises a support face 6 which is non-perpendicular to the upper surface 4 of the beam 2. The support faces 6 diverge from one another with increasing height above the beam 2, so that with increasing vertical distance from the upper surface 4 of the beam 2 the distance between the support faces 6 increases. The angles of the support faces 6 relative to the upper surface 4 of the beam 2 form a well between the angular supports 3, the geometry of which is appropriate for stably supporting the cylindrical container.

A more detailed discussion of the individual elements of the cradle 1 and its construction is provided below.

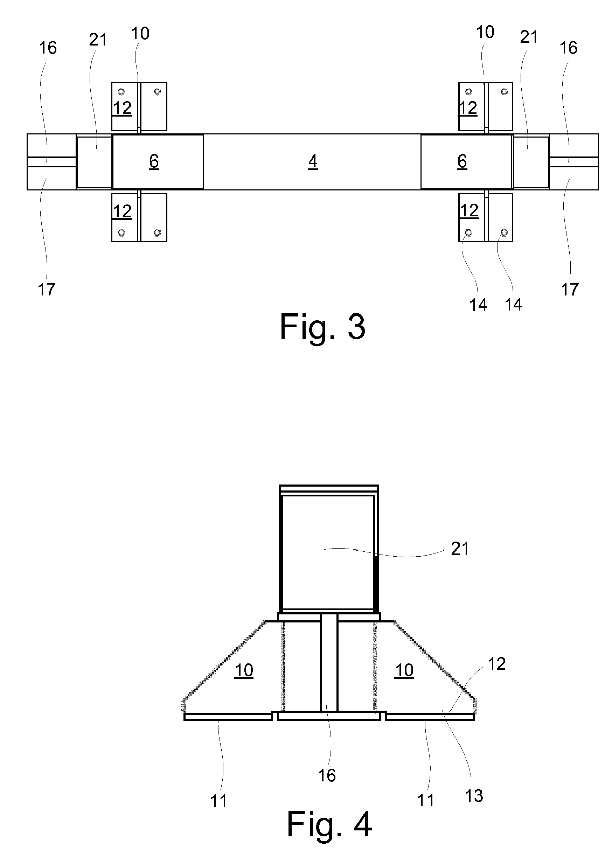

As best illustrated in figures 1 and 4, the beam 2 comprises three principal elements: A planar upper element, a planar lower element and a planar bridging element which connects the upper and lower elements together. The upper element is referred to below as an upper flange 7 and the lower element is referred to below as a lower flange 8. The bridging element is referred to as a web 9. The upper and lower flanges 7, 8 are parallel to one another and the web 9 is perpendicular to the flanges 7, 8. The geometrical relationship between the flanges 7, 8 and the web 9 is such that the beam 2 has an I-shaped cross-section when viewed end-on, and may be referred to as an I-beam.

In addition to its three principal elements 7, 8, 9 described above, the beam 2 may comprise one or more further structural supports which bridge between the upper and lower flanges 7, 8. These further structural supports may comprise one or more web stiffeners 10 of the type illustrated in figures 1 and 2. For example, the beam 2 illustrated in figures 1 and 2 comprises twelve such web stiffeners 10 connected between the upper and lower flanges 7, 8 and the web 9. Six stiffeners 10 are provided on each side of the web 9.

The web stiffeners 10 are planar elements that are perpendicular to the planes of both the upper and lower flanges 7, 8 and the web 9. As shown in figures 1 and 3, one or more of the web stiffeners 10 may project outwards beyond the longitudinal edges of the upper and lower flanges 7, 8 so as to be visible when the cradle 1 is viewed from above. These projecting web stiffeners 10 may each be associated with a further element 11 for securing the beam 2 to a floor, such as a concrete raft.

As shown in figure 1, the elements 11 for securing the cradle 1 to the floor may each comprise a plate or otherwise planar element which lies parallel to the floor and which can be fixed thereto. The plane of the securing elements 11 is parallel to the planes of the upper and lower flanges 7, 8 and, therefore, perpendicular to the planes of the web 9 and web stiffeners 10. As best shown in figures 1 and 4, the upper faces 12 of the securing elements 11 may be fixed to the lower edges 13 of the projecting web stiffeners 10 so that each projecting web stiffener 10 extends across the approximate centre of its associated securing element 11. Each securing element 11 may comprise one or more fixings by which the element 11 can be affixed to the floor. For example, the securing elements 11 illustrated in figures 1 and 3 each comprise two apertures 14 through which the elements 11 can be bolted or otherwise fixed into mountings located on the floor.

The beam 2 also comprises a linking region 15 for linking the beam 2 to the beam of an adjacent cradle. The linking region 15 may be provided at one or both ends of the beam 2 so that a plurality of cradles 1 can be linked together in a row. An example of a linking region 15 is illustrated in figures 1 to 4. The cradle 1 shown in these figures comprises a linking region 15 at each end of the beam 2. The linking region 15 comprises a planar linking element 16 which projects perpendicularly outwards from a web stiffener 10 at the end of the beam 2. The linking element 16 may be attached to this web stiffener 10 or may alternatively be attached to an extended region 17 of the lower flange 8. As a further alternative, the linking element 16 may be attached to both the web stiffener 10 and the extended region 17 of the lower flange 8, as best shown in figure 1. The plane of the linking element 16 may be parallel to the plane of the web 9 previously described. Indeed, as shown in figure 1, the plane of the linking element 16 may be the same as the plane of the web 9.

The linking element 16 comprises one or more fixings by which the element 16 can be affixed to a corresponding linking element of a neighbouring cradle. For example, as illustrated in figures 1 and 2, the linking element 16 may comprise an aperture 18 to which a linkage, shown in figure 1A, can be attached to link the cradle 1 to the linking element of the neighbouring cradle. A suitable linkage comprises one or more linkage plates 16A fabricated from a suitable material such as structural steel. The linkage plates 16A are pinned, for example using shear pins, through the apertures 18 of the two adjacent linking elements 16. A linkage plate 16A may be provided on both sides of the linking elements 16 in order to reinforce the link between the neighbouring cradles 1. In this configuration, the shear pins pin the linkage plates 16 together, sandwiching the linking elements 16 between them. The configuration of the linkage region 16 is advantageous because it distributes the load into the beam 2 and through the cradles 1 in an effective manner.

It will be appreciated that the nature of the linking region 15 is such that it is easily accessible from the top and sides of the cradle 1 and therefore can be used to attach cradles together quickly and without the need for complex equipment. This is advantageous at least because it allows a large array of the cradles to be assembled in an efficient and responsive manner when further container storage capacity is required.

Referring back to figure 1, the angular supports 3 each comprise a container support element 19, which includes the support face 6 referred to previously, and one or more further support elements connected between the container support element 19 and the upper surface 4 of the upper flange 7 of the beam 2. As best shown in figures 1 and 2, the container support element 19 is planar and extends from the upper surface 4 of the upper flange 7 at an angle to define a triangular region between its underside and the upper flange 7. In this triangular region, a first of the further support elements comprises a planar bridging element 20 connected between the underside of the container support element 19 and the upper surface 4 of the upper flange 7. The bridging element 20 has a triangular shape so as to fit within the triangular region. The plane of the bridging element 20 is parallel to the plane of the web 9 and perpendicular to the plane of the upper flange 7. Indeed, the plane of the bridging element 20 may the same as the plane of the web 9 previously discussed. The bridging element 20 at least partly bears the load of the container by bracing the container support element 19 against the force exerted by the container.

The angular supports 3 may also comprise one or more further bracing supports 21. These bracing supports 21 act to further brace the angled container support element 19 against the load exerted by the container in the cradling region 5. Examples of the further bracing supports 21 are illustrated in figures 1 and 2 as planar elements connected between the upper surface 4 of the upper flange 7 and the underside of the container support element 19. For example, referring to figure 1, each angular support 3 may comprise two such further bracing supports 21 extending perpendicularly from the underside of the container support element 19 to the upper surface 4 of the upper flange 7 on either side of the triangular bridging support 20 described above. The planes of the further bracing supports 21 of each angular support 3 are approximately parallel to one another and approximately perpendicular to the plane of the container support element 19.

The elements of the cradle 1 described above, including elements of the beam 2, angular supports 3 and linking regions 15, are formed from a metallic material such as steel. An example of a suitable steel is Standard Steel Grade S₃₅₅. Unless otherwise described, the points of contact between the individual elements of the cradle 1 may comprise permanent welds to form a strong and resilient cradle structure. The welds may be made using an autonomous manufacturing technique such as robotic manufacture. The relatively small number of elements means that the amount of welding required to assemble the cradle 1 is small and can be carried out relatively quickly. This is aided by the open section nature of the cradle 1, which makes for excellent accessibility to the welding points.

As will be appreciated from figures 1 to 4 and the description above, the cradle 1 has minimal locations in which debris and/or water could accumulate. This is advantageous because it allows the cradle 1 to be installed in an outside location and to be exposed to all weather conditions without significant concern for the effects that the accumulation of environmental debris such as dead leaves or litter may have on the structure.

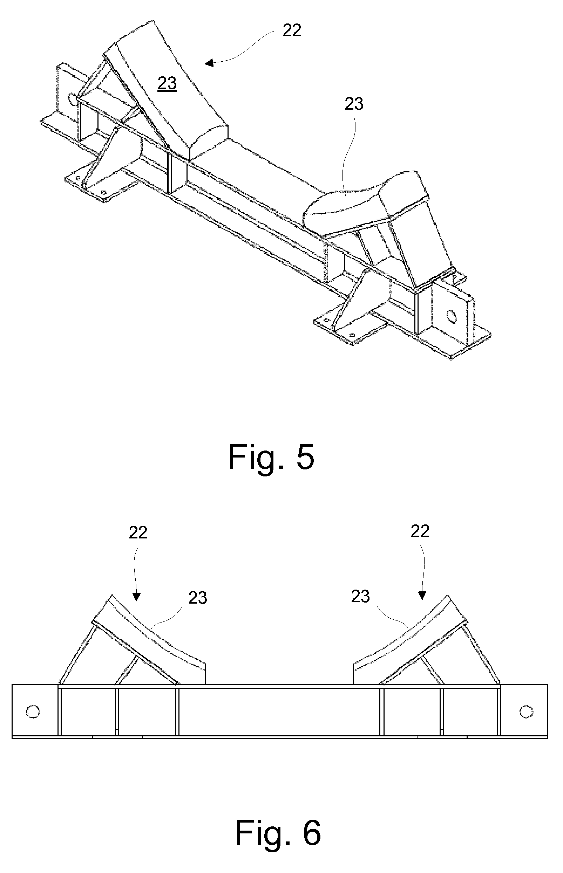

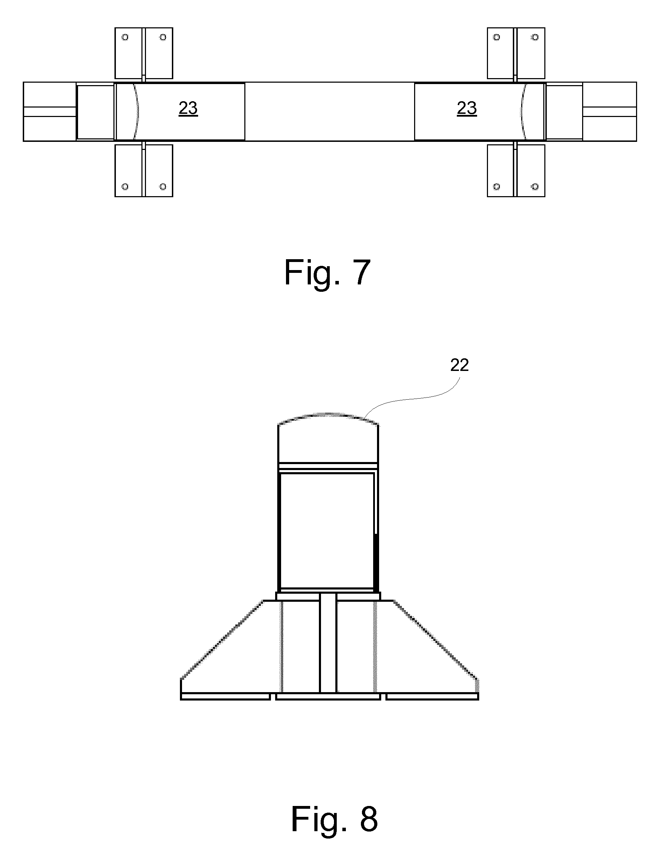

Referring to figures 5 to 8, the cradle 1 may further comprise a support pad 22 located against the support face 6 of each angular support 3. The support pads 22 substantially cover the support faces 6 of the angular supports 3 and are the regions of the cradle 1 which contact the peripheral walls of the container to support it in the cradling region 5. In addition to being located against the support surfaces 6 of the angular supports 3, the pads 22 may also be located against a partial region of the upper face 4 of the upper flange 7 between the two angular supports 3. The support pads 22 can be fixed to the angular supports 3 using any suitable method, such as pinning the pads 22 directly into the container support elements 19. The support pads 22 may also be fixed to the upper flange 7 in a similar manner.

As best illustrated in figures 5 and 6, the support pads 22 may comprise a concave support surface 23 against which the circumferential wall of a container lies when located in the cradle 1. The degree of curvature in the concave surface 23 may be selected so as to match the radius of curvature of the container to be supported.

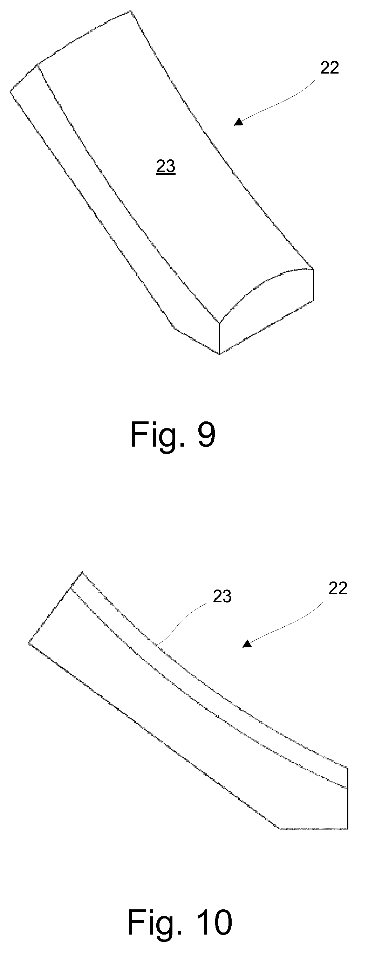

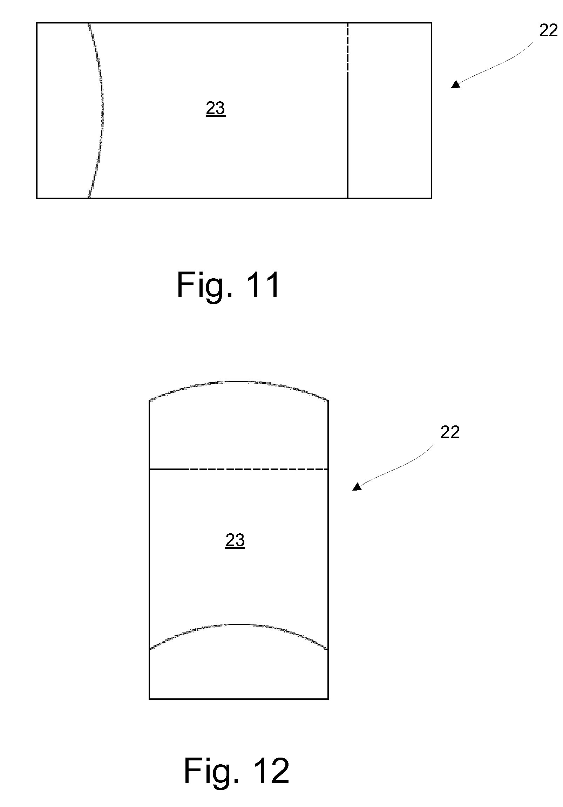

A function of the support pads 22 is to aid even distribution of the load of the container into the cradle 1. Another function of the support pads 22 is to allow for increased installation tolerances, for example when the cradles 1 are mounted to a floor. These functions may be aided by a degree of flexibility in the structure and/or material of the pads 22. An example of a suitable material for the pads 22 is a resilient and/or compliant plastics material. The pads 22 may be solid or may be to some extent hollow. Figures 9 to 12 illustrate the support pads 22 when not mounted on the cradle 1.

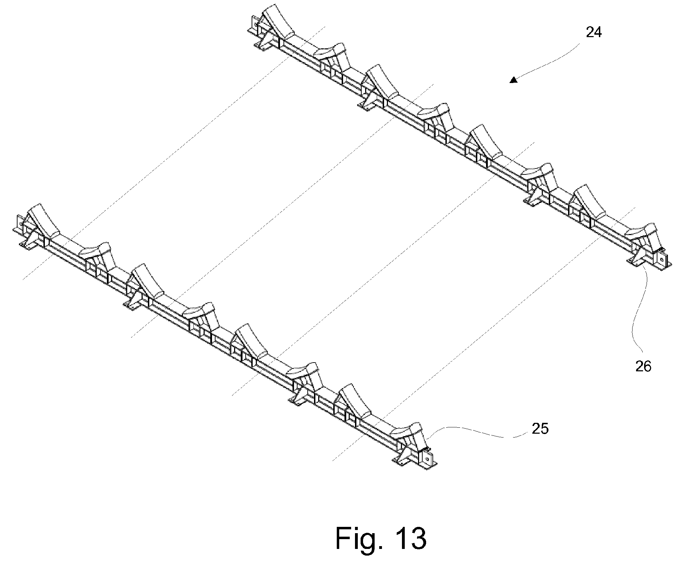

As outlined briefly above, a plurality of the cradles 1 can be linked together to form an array, on which a plurality of cylindrical containers can be stored. A section of such an array 24 is illustrated schematically in figure 13, which shows a plurality of cradles 1 connected together in two longitudinal arrangements. A first of the longitudinal arrangements 25 comprises a first plurality of cradles 1 linked together end to end. A second of the longitudinal arrangements 26 comprises a second plurality of cradles 1 linked together end to end. The two arrangements 25, 26 lie parallel to one another so that the cradles 1 in the first arrangement 25 support the first ends of a plurality of cylindrical storage containers and the cradles 1 in the second arrangement 26 support the second ends of the cylindrical storage containers (not shown). The longitudinal axes of the cylindrical storage containers are illustrated in figure 13 by dashed lines. The connected beams 2 of the cradles 1 in each arrangement 25, 26 run perpendicular to the longitudinal axes of the cylinders, both forward and aft of the cylinder bodies.

The array 24 allows for heavy cylindrical storage containers to be stacked in a close packed arrangement in long rows, for example mounted on concrete rafts. The design is such that it evenly distributes the weight of the cylinders directly into the ground for seismic and static load conditions. The welded stiffeners 10 in the beam 2 of each cradle 1 make use of standard plate construction that allows the load to be distributed to the ground in a manner that reduces the amount of bearing stress. Each cradle 1, as part of the array 24, can accommodate the seismic and static loads produced by stacking a plurality of tiers of cylinders above, such as three tiers. It will be appreciated that the size of the array 24 can easily be increased or reduced by linking more cradles 1 into the rows or by removing them using the readily accessible linking regions 15 previously described. The design of the linking regions 15 holds each cradle 1 in position and supports the horizontal loads that are imposed from having multiple levels of cylinders stacked on top of the cradles 1.

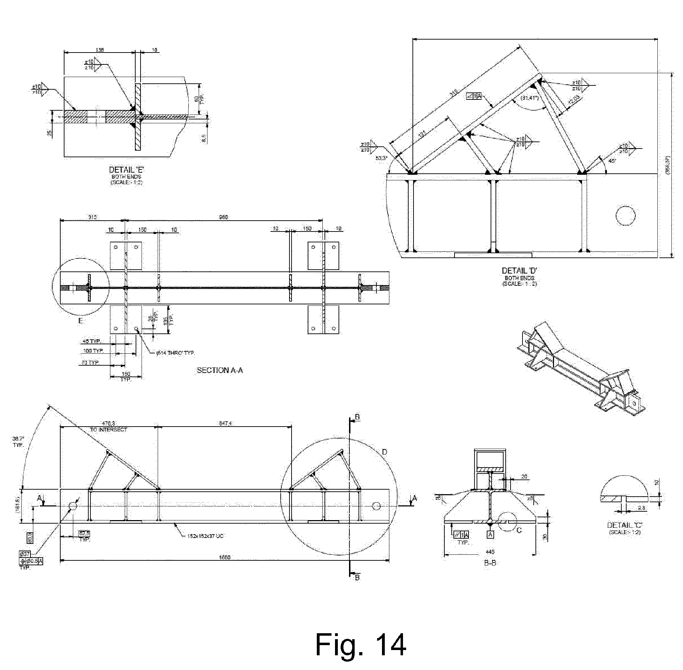

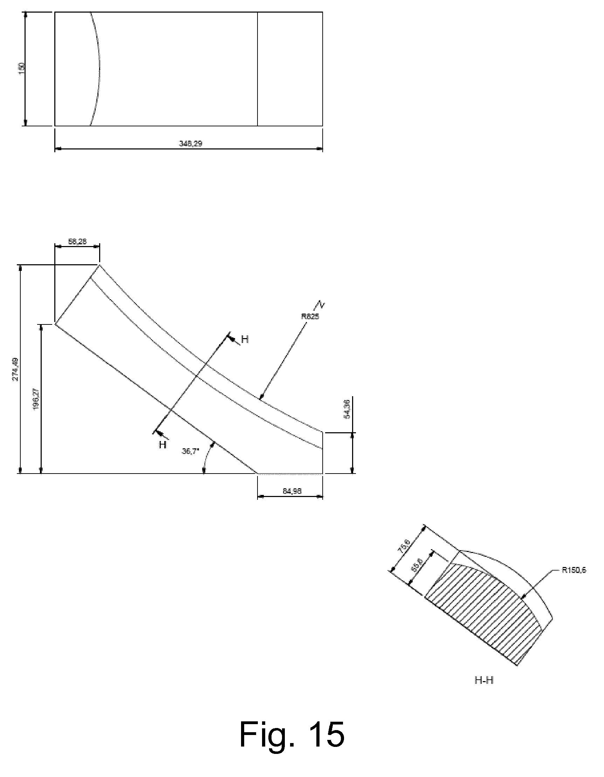

Figures 14 and 15 illustrate specific example dimensions and geometries for the beam 2, angular supports 3 and support pads 22.
Further examples cradles for supporting a generally cylindrical container of material in a stable position are described below. As with the cradles 1 described with respect to figures 1 to 15, the cradles described below may be used as part of an array of cradles for supporting a large number of containers in a close packed configuration. Many aspects of the cradles described below are interchangeable with corresponding aspects of the cradles 1 described with respect to figures 1 to 15, as will be implicitly evident to the skilled person and explicitly evident from the following description.

Referring to figure 16, a further example of a cradle 27 comprises a support member in the form of a beam 28 and two angular supports 29 for supporting a cylindrical storage container above the beam 28. As with the cradle 1 illustrated in, for example, figure 1 the angular supports 29 are located in a spaced-apart arrangement on an upper surface 30 of the beam 28. The region between the angular supports 29 is a cradling region 31, in which a container of material can be safely accommodated for short, medium and long term storage.

As with the cradles previously described, in use the direction of the beam 28 is perpendicular to the longitudinal axis of the container so that the beam 28 passes underneath the container in a transverse direction to support the container against gravity. In addition to supporting the container against gravity, the cradling region 31 is arranged to prevent the container from rolling or otherwise moving in a lateral direction relative to the beam 28.

The angular supports 29 of the cradling region 31 each comprises a support face 32 which is non-perpendicular to the upper surface 30 of the beam 28. The support faces 32 diverge from one another in the manner described above in relation to the support faces 6 shown in figure 1, so that the support faces 32 form a well between the angular supports 29. The geometry of this well is appropriate for stably supporting the cylindrical container. The support faces 32 shown in figure 16 differ from those described with respect to figure 1 by a plurality of recesses 33 in the periphery of each support face 32. The recesses 33 may, for example, each comprise an approximately rectangular cut-out in the edge of the support face 32, as exemplified by the five rectangular recesses 33 illustrated in figure 16.

The beam 28 substantially corresponds to the beam 2 described previously with respect to figure 1. The beam 28 includes a planar upper element, a planar lower element and a planar bridging element in the form of an upper flange 34, a lower flange 35 and a web 36. The geometrical relationships between these elements 34, 35, 36 correspond to those of the flanges 7, 8 and web 9 previously described, such that the beam 28 may be referred to as an I-beam.

As with the beam 2 described previously, the beam 28 may also comprise one or more further structural supports in the form of web stiffeners 37 which bridge between the upper and lower flanges 34, 35. For example, the beam 28 illustrated in figures 16 and 17 comprises 16 such web stiffeners 37, with eight stiffeners 36 being provided on each side of the web 36.

The web stiffeners 37 correspond to the web stiffeners 10 previously described. As in the cradles 1 described above, one or more of the web stiffeners 37 project outwards beyond the longitudinal edges of the upper and lower flanges 34, 35 so as to be visible when the cradle 1 is viewed from above. As shown in figure 16, these projecting web stiffeners 37 may each be associated with a further element 38 for securing the beam 28 to a floor, such as a concrete raft. The further elements 38 substantially correspond to the further elements 11 described above with respect to figure 1. Each element 38 may include apertures 39 through which the elements 38 can be bolted or otherwise fixed into mountings located on the floor.

Additionally, unlike the projecting web stiffeners 10 shown in figure 1, the projecting web stiffeners 37 of this example may each comprise an upper flange 40. The upper flange 40 of each projecting web stiffener 37 is substantially co-planar with the upper flange 34 of the beam 28 and parallel with the further element 38 for securing the beam 28 to the floor.

Referring again to figure 16, a linking region 41 at one or both ends of the beam 28 is similar to the linking regions 15 discussed previously in relation to figures 1 to 4. As with the previously described examples, the linking region 15 comprises a planar linking element 42 which projects perpendicularly outwards from a web stiffener 37 at the end of the beam 2. As shown in figure 16, the linking element 42 is attached to at least one of the web stiffener 37, an extended region 43 of the lower flange 35 of the beam 28 and an extended region 44 of the upper flange 34 of the beam 28. The linking element 42 may be attached to any combination of these three elements 37, 43, 44 of the beam 28, for example by suitable welds. Alternatively, linking element 42 may be of one-piece construction (e.g. a one-piece casting) with the extensions of the upper and lower flanges 43, 44, as shown in figure 16. The plane of the linking element 42 may be parallel to, or the same as, the plane of the web 36 of the beam 28.

The linking element 42 comprises one or more fixings by which the element 42 can be affixed to a corresponding linking element of a neighbouring cradle. For example, as illustrated in figures 16 and 17, the linking element 42 may comprise an aperture 45 to which a linkage can be attached to link the cradle 27 to the linking element of the neighbouring cradle. The aperture 45 and the linkage may substantially correspond to the aperture 18 described previously with respect to figure 1 and the linkage described previously with respect to figure 1A. For example, a suitable linkage comprises one or more linkage plates 46 fabricated from a suitable material such as structural steel. The linkage plates 46 are pinned, for example using shear pins, through the apertures 45 of the two adjacent linking elements 42. A linkage plate 46 may be provided on both sides of the linking elements 42 in order to reinforce the link between the neighbouring cradles 27. In this configuration, the pins 47 pin the linkage plates 46 together, sandwiching the linking elements 42 between them. As with the linking region 16 described previously with respect to figure 1, the configuration of the linking region 41 is advantageous because it distributes the load into the beam 2 and through the cradles 27 in an effective manner. An example of the linkage plate 46 is shown in figure 16A and an example of a pin 47 for attaching the plate 46 to the linking element 42 is shown in figure 16B. This pin 47 may be a shear pin. Figure 16C illustrates an example of a locking pin 48 which can be passed diametrically through diametric bores 49 at either end of the pin 47 to ensure that the pin 47 remains in place in the linking region 42. The locking pin 48 comprises a right-angled bend to prevent it from falling out of the bore 49 accidentally.

As with the linking region 15 described previously, the nature of the linking region 42 is such that it is easily accessible from the top and sides of the cradle 27 and therefore can be used to attach cradles together quickly and without the need for complex equipment.

Referring back to figure 16, the angular supports 29 each comprise a container support element 50 which substantially corresponds to the container support elements 19 discussed with respect to previous examples of the cradle 1. The container support elements 50 include the container support faces 32 referred to previously. Similarly, as with previous examples, the angular supports 29 also include one or more further support elements 51, 52 connected between the container support element 50 and the upper surface 30 of the upper flange 34 of the beam 28.

As best shown in figures 16 and 17, the container support element 50 is planar and extends from the upper surface 30 of the upper flange 34 at an angle to define a triangular region between its underside and the upper flange 34. In this triangular region, a first of the further support elements comprises a planar bridging element 51 connected between the underside of the container support element 50 and the upper surface 30 of the upper flange 34. The bridging element 51 corresponds to the bridging element 20 previously discussed in relation to figure 2. As previously described, the bridging element 51 at least partly bears the load of the container by bracing the container support element 50 against the force exerted by the container.

The angular supports 29 may also comprise one or more further bracing supports 52. As with the further bracing supports 21 described previously, these bracing supports 52 act to further brace the angled container support element 50 against the load exerted by the container in the cradling region 31. Examples of the further bracing supports 52 are illustrated in figures 16 and 17 as planar elements connected between the upper surface 30 of the upper flange 34 of the beam 28 and the underside of the container support element 50. For example, referring to figure 16, each angular support 29 may comprise two such further bracing supports 52 extending perpendicularly from the underside of the container support element 50 to the upper surface 30 of the upper flange 34 of the beam 28 on either side of the triangular bridging element 51 referred to above. As with previously described examples, the planes of the further bracing supports 52 of each angular support 29 are approximately parallel to one another and approximately perpendicular to the plane of the planar bridging element 51.

As best shown in figure 16, unlike the further bracing supports 21 illustrated in figure 1, one or more of the further bracing supports 52 in this example of the cradle 27 may extend beyond the longitudinal peripheries of the container support element 50 and upper flange 34 of the beam 28. In so doing, the bottom edge of this further bracing support 52 may extend onto the upper flange 40 of the projecting web stiffeners 37 described above, on both sides of the beam 28, thereby further distributing the load exerted on the angular support 29 by the container in the cradling region 31.

As with the element of the cradle 1 already discussed, the elements of the cradle 27, including elements of the beam 28, angular supports 29 and linking regions 41, are formed from a metallic material such as steel. An example of a suitable steel is Standard Steel Grade S₃₅₅. Unless otherwise described, the points of contact between the individual elements of the cradle 27 may comprise permanent welds to form a strong and resilient cradle structure. The welds may be made using an autonomous manufacturing technique such as robotic manufacture. The relatively small number of elements means that the amount of welding required to assemble the cradle 1 is small and can be carried out relatively quickly. This is aided by the open section nature of the cradle 27, which makes for excellent accessibility to the welding points.

As will be appreciated from, for example, figures 16 to 20 and the description above, the cradle 27 has minimal locations in which debris and/or water could accumulate. This provides at least the advantages previously discussed.

Referring to figures 20 to 27, the cradle 1 may further comprise first and second support pads 53 respectively located against the support faces 32 of the angular support 29. The support pads 53 substantially cover the support faces 32 of the angular supports 29 and are the region of the cradle 27 which contact the peripheral walls of the container to support it in the cradling region 31. The support pads 53 perform a corresponding function to the support pads 22 described above with respect to previous examples.

The support pads 53 are joined together by a bridging support 54, which spans the region of the cradle 27 in between the angular supports 29. The bridging support 54 is located against the section of the upper face 30 of the upper flange 34 of the beam 28 in between the two angular supports 29. As best shown in figures 20 and 22, the first and second pads 53 and the bridging support 54 may together substantially cover the upper face 30 of the upper flange 34 of the beam 28 in the region between the two angular supports 29.

As shown in figures 20, 21, 24 and 25, and as with the examples discussed previously, the support pads 53 may each comprise a concave support surface 55 against which the circumferential wall of a container lies when located in the cradle 27. The degree of curvature in the concave surface 55 may be selected so as to match the radius of curvature of the container to be supported. Similarly, bridging support 54 may also comprise a concave support surface 56 having a radius of curvature selected to match the radius of curvature of the container to be supported. As illustrated in figure 25, the shape of the support surface 56 of the bridging support 54 may be an approximate arc and the radius of curvature of this arc may be substantially equal to the radius of the container.

In this configuration, the support surfaces 55, 56 of the support pads 53 and the bridging support 54 may together provide a contiguous and substantially unbroken support surface that matches and continuously follows the shape of the container when the container sits in the cradling region 31.

As with the pads 22 previously discussed, the support pads 53 can be fixed to the angular supports 29 using any suitable method, such as by clipping or pinning the pads 53 directly to the container support elements 50. The bridging support 54 may also be fixed to the upper flange 34 in a similar manner.

As with the examples previously described, a function of the support pads 53 is to aid even distribution of the load of the container into the cradle 27. The bridging support 54 may further aid this load distribution into the cradle 27. Another function of the support pads 53 and bridging support 54 is to allow for increased installation tolerances, for example when the cradles 27 are mounted to a floor. These functions may be aided by a degree of flexibility in the structure and/or material of the pads 53 and the bridging support 54. An example of a suitable material for the pads 53 and bridging support 54 is a resilient and/or compliant plastics material. The pads 53 and bridging support 54 may be solid or may be to some extent hollow. The pads 53 and bridging support 54 may be manufactured as a one-piece unit. Figures 24 to 26 illustrate the support pads 53 and bridging support 54 when not mounted on the cradle 27.

As already outlined above with respect to the previous examples, a plurality of the cradles 27 can be linked together to form an array, on which a plurality of cylindrical containers can be stored. Links between the cradles 27 can comprise the linking regions referred to above. Alternatively, the cradles 27 can be linked together by creating multiple cradling regions 31 on a single, extended beam 28. Examples of this are illustrated in figures 28 to 33. As described previously with respect to figure 13, such arrays of cradles 27 can be connected together in two longitudinal arrangements. A first of the longitudinal arrangements 25 comprises a first plurality of cradles linked together end to end. A second of the longitudinal arrangements 26 comprises a second plurality of cradles linked together end to end. The two arrangements 25, 26 lie parallel to one another so that the cradles 1 in the first arrangement 25 support the first ends of a plurality of cylindrical storage containers and the cradles 1 in the second arrangement 26 support the second ends of the cylindrical storage containers (not shown). The longitudinal axes of the cylindrical storage containers are illustrated in figure 13 by dashed lines. The connected beams 2 of the cradles 1 in each arrangement 25, 26 run perpendicular to the longitudinal axes of the cylinders, both forward and aft of the cylinder bodies.

As previously described, the array allows for heavy cylindrical storage containers to be stacked in a close packed arrangement in long rows, for example mounted on concrete rafts. The design is such that it evenly distributes the weight of the cylinders directly into the ground for seismic and static load conditions. The welded stiffeners 37 in the beam 28 of each cradle 27 make use of standard plate construction that allows the load to be distributed to the ground in a manner that reduces the amount of bearing stress. Each cradle 27, as part of the array, can accommodate the seismic and static loads produced by stacking a plurality of tiers of cylinders above, such as three tiers. It will be appreciated that the size of the array can easily be increased or reduced by linking more cradles 27 into the rows or by removing them using the readily accessible linking regions 42 previously described. The design of the linking regions 42 holds each cradle 27 in position and supports the horizontal loads that are imposed from having multiple levels of cylinders stacked on top of the cradles 27.

The cradling system described above is capable of safely supporting cylindrical storage containers of material in three vertical tiers, as illustrated in figure 34. As shown in figure 34, a plurality of cylindrical storage containers C may be spaced apart by spacers S in a stacked vertical array. The spacers S may be formed of resilient plastics material and shaped to stably support the second and third tiers of containers C in the array. Each spacer C may, for example, comprise three concave surfaces as shown in figure 34, the radii of which match the exterior radii of the longitudinal surfaces of the storage containers C. The mass of each cradle 1 may be relatively low, such as approximately 85kg, which makes for easier installation of the array 24. Once installed on concrete rafts, for example using conventional concrete anchors, the cradles 1 do not require maintenance over a twenty five year period.

The system may be optimised and configured to store industry-standardised containers of uranium hexafluoride (UF6) in an indoor or outdoor environment. Such containers are generally cylindrical in shape. Examples containers include the type 30B UF6 cylinder and the type 48Y UF6 cylinder.

The alternatives described above can be used singly or in combination.

## Claims

1. A cradle for supporting a cylindrical storage container, comprising:
a longitudinal support member having at least one flange;
first and second angular supports forming a cradle region to support the container in a stable position above the at least one flange;
at least one first support pad located on a support surface of the first angular support; and
at least one second support pad located on a support surface of the second angular support.

2. A cradle according to claim 1, wherein the at least one flange comprises an upper flange and the support member further comprises a lower flange.

3. A cradle according to claim 2, wherein the support member further comprises a web between the upper and lower flanges.

4. A cradle according to any preceding claim, wherein the planes of the support surfaces of the first and second angular supports diverge from one another with increasing perpendicular distance from the at least one flange.

5. A cradle according to any preceding claim, wherein the first and second angular supports each comprises a planar container support element and a planar bridging element welded between an underside of the container support element and the at least one flange.

6. A cradle according to any preceding claim, comprising a linking region for linking the cradle to a corresponding linking region of a neighbouring cradle.

7. A cradle according to any preceding claim, wherein the first and second angular supports are separated by a region of the longitudinal support member.

8. A cradle according to any preceding claim, wherein the at least one first support pad is separated by a gap from the at least one second support pad.

9. A cradle according to any preceding claim, wherein the first support pad is separate from the second support pad.

10. A cradle according to any of claims 1 to 7, further comprising a bridging support located between the at least one first support pad and the at least one second support pad.

11. A cradle according to claim 10, wherein the at least one first support pad is joined to the at least one second support pad by the bridging support.

12. A cradle according to claim 10 or 11, wherein the bridging support comprises a concave support surface for supporting a circumferential surface of a cylindrical storage container.

13. A cradle according to any preceding claim, wherein the at least one first support pad comprises a concave support surface for supporting a circumferential surface of a cylindrical uranium storage container.

14. A cradle according to any preceding claim, wherein the at least one second support pad comprises a concave support surface for supporting a circumferential surface of a cylindrical uranium storage container.

15. A system for supporting a plurality of cylindrical storage containers, comprising a plurality of cradles as claimed in any preceding claim linked together to form at least two rows of cradling regions to support the forward and aft ends of the plurality of containers.
